# FASCICULE DE BREVET EUROPEEN

(11) **EP 0 422 994 B1**
(45) Date de publication et mention de la délivrance du brevet: **07.09.1994**
(21) Numéro de dépôt: 90402743.0
(22) Date de dépôt: 03.10.1990
(51) Int. Cl.: C25B 1/04, C25B 9/00

(54) **Appareil de préparation par électrolyse de l'eau d'un mélange gazeux d'oxygène et d'hydrogène servant à l'alimentation d'une flamme d'ionisation**
Vorrichtung zur Herstellung eines zur Versorgung einer Ionisierungsflamme dienenden Wasserstoff-Sauerstoff-Gasgemisches durch Wasserelektrolyse
Apparatus for the production by electrolysis of water of a hydrogen-oxygen gaseous mixture used for feeding an ionisation flame

(30) Priorité: 10.10.1989 FR 8913209
(43) Date de publication de la demande: 17.04.1991
(73) Titulaire: GEOSERVICES, F-93150 Le Blanc-Mesnil (FR)
(72) Inventeur: Issenman, Olivier, F-92200 Neuilly S/Seine (FR)

(56) Documents cités:
- DE-A- 1 467 060
- DE-A- 1 592 296
- GB-A- 2 205 858
- CHEMICAL ABSTRACTS, vol. 92, no. 12, juin 1980, page 520, résumé no. 206097v,Columbus, Ohio, US; & JP-A-79 42 678 (YANAGIMOTO MFG. CO., LTD) 15-12-1979

## Description

La présente invention est relative à un appareil de préparation, par électrolyse de l'eau, d'un mélange gazeux d'oxygène et d'hydrogène servant à l'alimentation d'une flamme d'ionisation.

Ainsi qu'on le sait, on utilise, dans de nombreux appareils de laboratoire, de petites flammes destinées à produire certains effets, et servant notamment à l'ionisation de molécules organiques, ce qui permet leur identification.

Dans les détecteurs visant à déceler l'existence de faibles traces de molécules, il est usuel d'utiliser une flamme alimentée à l'aide d'un combustible non-organique, c'est-à-dire ne comportant pas d'atomes de carbone organique. Le combustible le plus couramment utilisé dans ce cas est l'hydrogène servant à ioniser les particules qui sont ensuite recueillies par un système d'électrodes approprié.

L'hydrogène qui est nécessaire peut, par exemple, être fourni à l'état pur par une bouteille sous pression, ou bien être préparé par un générateur d'hydrogène qui, dans le cas d'un appareil de laboratoire, fournit par minute quelques centimètres-cube de ce gaz.

Les appareils usuels dans le commerce font appel à l'électrolyse de l'eau et veillent, par leur structure et leur fonctionnement, à une séparation parfaite de l'hydrogène et de l'oxygène, notamment en faisant appel à des membranes semi-perméables de séparation et à des électrodes en platine, ce qui impose d'utiliser, en tant d'électrolyte, une eau bi-distillée additionnée d'une quantité précise d'un corps dissociable très pur.

De tels générateurs sont donc des appareils coûteux, fragiles qui exigent beaucoup de soin et un entretien constant. Leur utilisation n'est en fait justifiée que lorsque l'on désire absolument utiliser de l'hydrogène très pur.

Lorsqu'il est possible, lors de l'alimentation en oxygène de la flamme d'ionisation, d'utiliser en même temps de l'hydrogène comme combustible, on peut se contenter d'un mélange combustible formé d'un mélange d'oxygène et d'hydrogène (ne contenant pas de traces de corps organiques), tel qu'il est produit par exemple par électrolyse.

Le brevet britannique 2 505 858 a fait connaître un appareil d'électrolyse de l'eau, fournissant un mélange d'oxygène et d'hydrogène, utilisable par exemple pour la soudure autogène. Le dispositif est transportable et comporte plus particulièrement :
Un organe de contrôle de la pression des gaz,
Un organe de sécurité arrêtant l'électrolyse en cas de surpression,
Un dispositif de deshumidification des gaz.

Ce dispositif nécessite toutefois, pour son utilisation, le chauffage de l'électrolyte et recycle dans ce dernier l'humidité dont les gaz ont été débarrassés.

L'invention a donc essentiellement pour objet un appareil d'électrolyse de l'eau, fournissant un mélange stoechiométrique d'oxygène et d'hydrogène prêt à brûler qui soit d'un maniement facile tout en assurant la sécurité désirée, ledit dispositif d'une structure ramassée étant aisément transportable sur le chantier, par exemple dans une cabine d'analyse située sur un lieu de forage pétrolier.

L'appareil conforme à l'invention, qui est pourvu d'un système d'électrolyse, d'un dispositif d'alimentation électrique du système d'électrolyse et d'organes de contrôle, est essentiellement caractérisé par le fait qu'il comporte en combinaison un châssis immobilisable sur son assise et supportant le système d'électrolyse, des organes de contrôle de la pression des gaz préparés dans le système d'électrolyse, un organe de sécurité arrêtant l'électrolyse en cas de surpression, un organe de surveillance de niveau minimal de l'électrolyte dans le récipient d'électrolyse et arrêtant cette dernière et fournissant un signal d'alarme en cas d'insuffisance de remplissage du récipient d'électrolyse, un dispositif de déshumidification des gaz se dégageant du système d'électrolyse et une poignée empêchant toute utilisation de l'appareil lors de son transport.

L'appareil conforme à l'invention, qui comprend un châssis immobilisable sur son assise et supportant le système d'électrolyse, un dispositif d'alimentation électrique de ce dernier, des organes de contrôle de la pression des gaz préparés dans le système d'électrolyse, un organe de sécurité (11) arrêtant l'électrolyse en cas de surpression, un dispositif de déshumidification des gaz se dégageant du système d'électrolyse, est essentiellement caractérisé par le fait qu'il comporte en combinaison un organe de surveillance, qui contrôle dans le récipient d'électrolyse le niveau minimal de l'électrolyte présent et qui, en cas d'insuffisance de remplissage du récipient d'électrolyse, arrête cette dernière en fournissant un signal d'alarme, et une poignée (20) amovible qui empêche toute utilisation de l'appareil lors de son transport.

Dans une forme de réalisation préférée de l'appareil conforme à l'invention, le récipient contenant l'électrolyte supporte les électrodes par son couvercle étanche qui est pour vu d'un bouchon de remplissage et de deux ajutages ou embouts isolés de l'atmosphère par des raccords rapides pouvant être reliés l'un aux moyens de contrôle de la pression des gaz libérés dans le réservoir d'électrolyse et l'autre au dispositif déshumidificateur porté par le châssis du dispositif.

Selon une autre caractéristique de l'invention, le dispositif de déshumidification du mélange des gaz produits est constitué par un récipient tubulaire rempli de gel de silice et obturé à sa partie supérieure par un couvercle étanche supportant deux raccords rapides inversés, la partie femelle du raccord rapide, servant à l'entrée du mélange gazeux dans le dispositif déshumidificateur, pouvant être reliée à la partie mâle correspondante du raccord, reliée quant à elle, par une tubulure, à l'un des embouts du couvercle du récipient d'électrolyse, la partie mâle de l'autre raccord rapide, solidaire du couvercle du récipient de déshumidification du mélange gazeux, étant reliée à la partie femelle correspondante du raccord, qui est reliée, en ce qui la concerne, à une tubulure servant au transfert du mélange gazeux hydrogène/oxygène déshumidifié à un dispositif régulateur de pression monté en amont d'un système d'analyse à ionisation de flamme.

Selon une autre caractéristique de l'invention, la partie femelle du raccord rapide, servant à l'introduction du gaz à déshumidifier, débouche dans un tube de diffusion pourvu d'une pluralité de perforations et traversant le gel de silice, ledit tube, après avoir traversé une perforation prévue dans un tamis de retenue du produit déshumidificateur porté par une douille pénétrant dans le tube à sa partie inférieure, débouchant lui-même, à sa partie inférieure, dans un pot de décantation amovible.

Selon une autre caractéristique de l'invention, le pot de décantation amovible est vissable sur la partie inférieure du tube déshumidificateur et présente intérieurement un épaulement qui, lorsqu'il est mis en place sur ledit déshumidificateur, presse, dans le tube proprement dit de ce dernier, la douille de support du tamis de retenue du produit déshumidificateur, qui est pourvue d'un joint torique d'étanchéité et d'une anse de préhension facilitant son extraction du tube.

D'autres caractéristiques et avantages de l'invention ressortiront de la description détaillée qui va suivre, en regard des dessins annexés qui représentent, schématiquement et simplement à titre d'exemple, un mode de réalisation préféré de l'appareil de production du mélange d'oxygène et d'hydrogène.

Sur ces dessins :
- La Fig. 1: est une vue schématique en élévation de l'ensemble de l'appareil de préparation par électrolyse d'un mélange d'oxygène et d'hydrogène, le dispositif déshumidificateur étant écarté du châssis de l'appareil et représenté partie en coupe diamétrale.
- La Fig. 2: est, à deux échelles différentes, une vue analogue à celle de la figure 1, le déshumidificateur étant représenté de façon simplifiée, mais montrant la liaison de ses raccords rapides aux conduites d'entrée et de sortie du mélange gazeux.
- La Fig. 3: est une vue de dessus correspondant à celle de la figure 1, le récipient d'électrolyse étant prêt à être utilisé.
- La Fig. 4: est une vue analogue à celle de la figure 3, le dispositif étant pourvu de sa poignée de transport.
- La Fig. 5: est une vue de dessus du récipient d'électrolyse, le reste de l'appareillage étant enlevé.
- La Fig. 6: est une vue en coupe suivant VI - VI de la figure 5.
- La Fig. 7: est une vue en coupe suivant VII - VII de la figure 6.
- La Fig. 8: est une vue en perspective montrant la forme et la disposition réciproque des électrodes.
- La Fig. 9: est une vue en perspective correspondant à celle de la figure 8 et montrant le montage des électrodes sur un élément cruciforme isolant, l'anode étant placée entre les deux cathodes cylindriques intérieure et extérieure.
- La Fig. 10: est une vue en plan de dessus de l'élément cruciforme isolant.
- La Fig. 11: est une vue en coupe verticale axiale de l'élément cruciforme, selon la ligne XI - XI de la figure 10.
- La Fig. 12: est une vue schématique montrant l'ensemble du système électrique du dispositif.

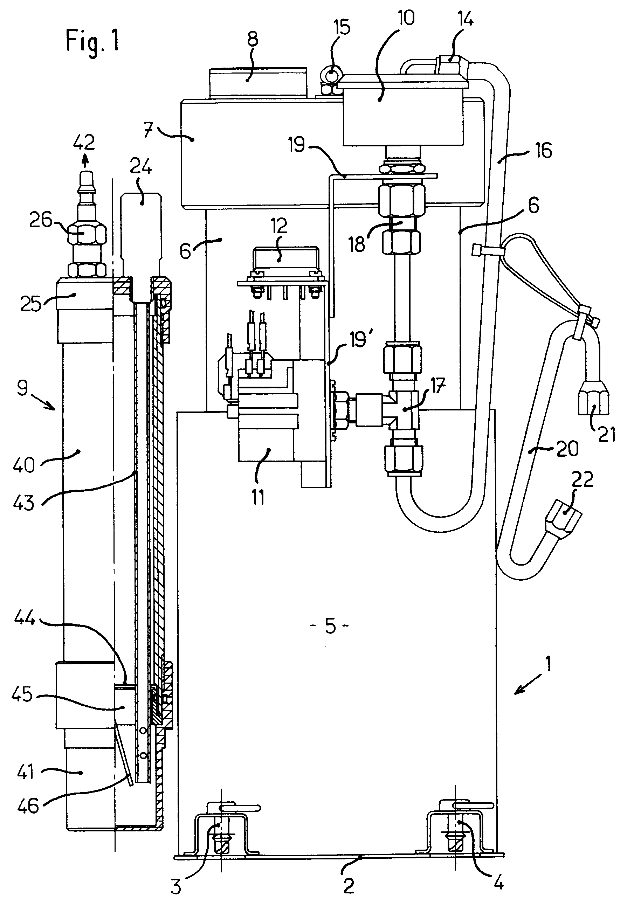

Comme on peut le voir sur la figure 1, le dispositif de production du mélange d'hydrogène et d'oxygène est constitué par un châssis désigné dans son ensemble par la référence 1, ledit châssis étant essentiellement constitué par une embase 2 pourvue de moyens 3 et 4 de verrouillage rapide dudit châssis sur une assise appropriée. L'embase 2 que comporte le châssis 1 est, dans la forme d'exécution représentée, de forme rectangulaire et elle supporte un carter cylindrique 5 dans lequel est assujetti le réservoir d'électrolyse 6 pourvu d'un couvercle vissable 7 étanche, lui-même équipé d'un bouchon 8 quart de tour servant au remplissage et pourvu d'une soupape de sécurité non-représentée, du type autocuiseur. Le carter cylindrique 5 comporte des pattes de support pour un tube déshumidificateur désigné dans son ensemble par la référence 9, pour un dispositif 10 de mesure de la pression et pour un interrupteur de pression 11 couplé au répartiteur électrique 12.

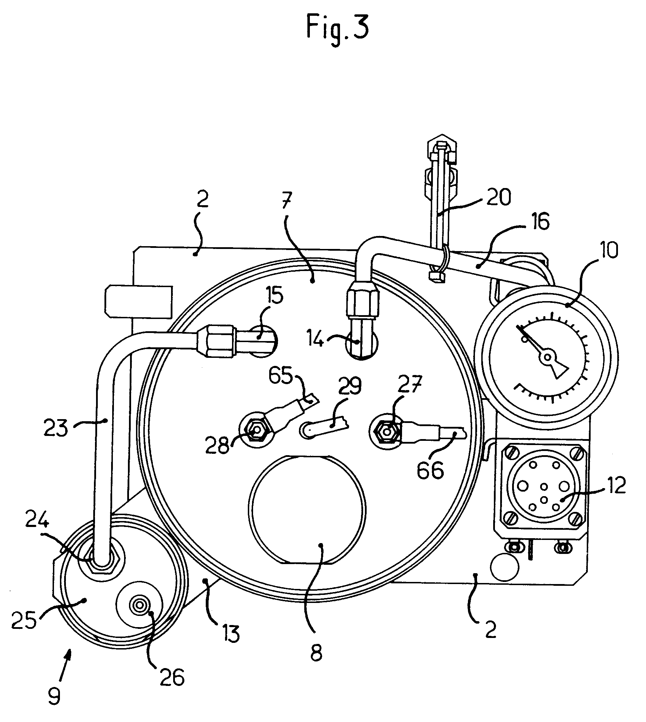

On peut voir également, sur la figure 3 des dessins, une patte de support 13 pour le déshumidificateur 9. A la partie supérieure du couvercle 7 sont prévus deux embouts 14 et 15. L'embout 14 est relié au dispositif 10 de contrôle de la pression, en l'occurrence un manomètre, par l'intermédiaire d'une conduite 16 aboutissant à un distributeur formé par un raccord 17 en T qui, quant à lui, est relié d'une part au manomètre 10 et, d'autre part, à l'interrupteur de pression 11 associé qui, en cas de dépassement d'une pression déterminée dans le récipient 7 d'électrolyse, coupe l'alimentation en courant des électrodes depuis le répartiteur électrique 12. Le distributeur 17 en T est relié, par un raccord 18, au manomètre 10 supporté par une équerre 19 solidaire d'un étrier 19' fixé au carter cylindrique 5 et supportant l'interrupteur de pression 11, le distributeur 17 en T et le répartiteur électrique 12.

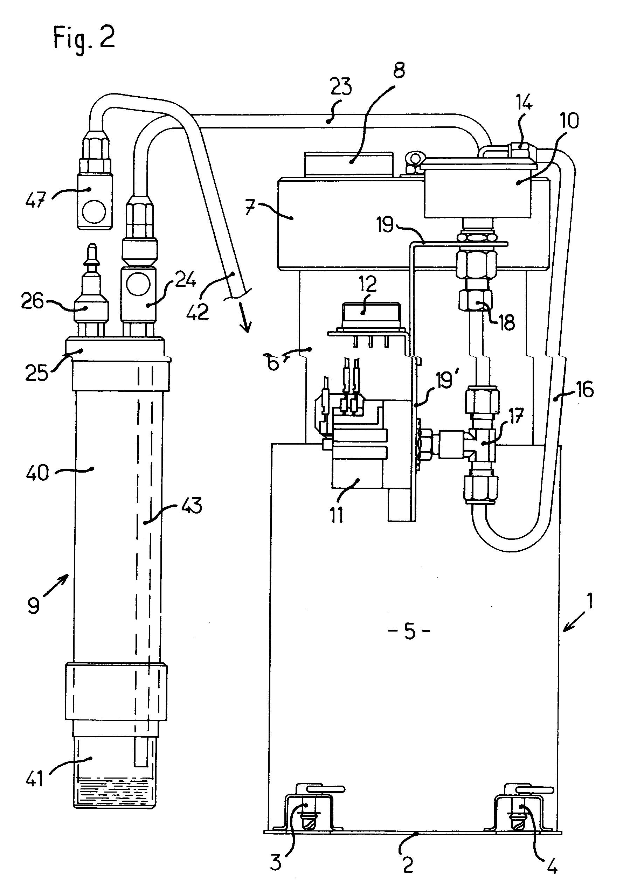

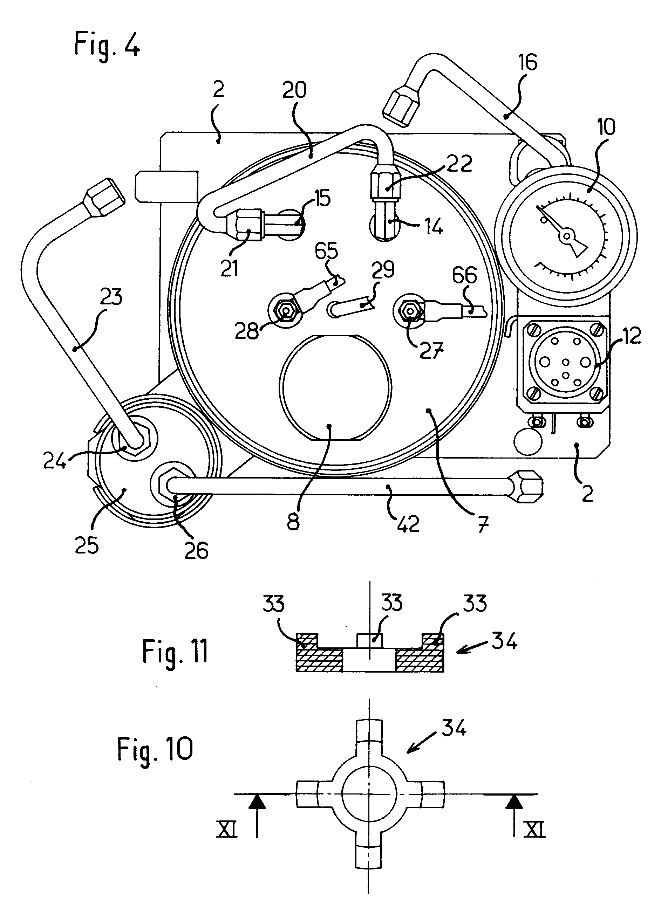

Sur la tubulure 16, reliant l'ajutage 14 au distributeur 17 en T, est fixée, ainsi qu'on l'a représenté, une poignée de transport 20 comportant deux raccords taraudés 21 et 22 venant respectivement se visser, dans la position de transport de l'appareil représenté à la figure 4, le premier sur l'ajuta ge ou embout 14 après dévissage de la tubulure 16 et le second sur l'ajutage 15 également débarrassé d'une tubulure 23, non représentée sur la figure 1 des dessins, mais représentée aux figures 2 à 4, et le reliant, quant à lui, à un raccord rapide 24 servant à l'entrée, dans le déshumidificateur 9, du mélange gazeux produit par les électrodes plongeant dans l'électrolyte contenu dans le récipient 6.

A la figure 3, on a représenté en plan l'appareil qui vient d'être décrit en regard de la figure 1. Sur cette figure, on peut voir la plaque de base 2, le couvercle 7 du récipient d'électrolyse, le bouchon de remplissage 8, le manomètre 10, la tubulure 16, l'ajutage 14, l'ajutage 15, et une tubulure souple 23 reliant l'embout 15 au raccord rapide 24 d'introduction du mélange gazeux produit dans le déshumidificateur, dont on ne voit que le couvercle supérieur 25 portant un raccord rapide 26 servant au transfert du mélange déshumidifié.

On peut voir également le répartiteur 12 à broches servant au branchement électrique des différents organes de l'appareil, notamment à l'alimentation des électrodes par les bornes 27 et 28 prévues sur le couvercle 7 du récipient. On peut également voir sur cette figure un conducteur 29 pénétrant dans le récipient 6 d'électrolyse et relié à un dispositif, non représenté ici, qui sert à la mesure, par voie électrique, du niveau de l'électrolyte, et dont il sera question plus loin. Sur cette figure 3, la poignée de transport 20 est fixée de manière amovible à la tubulure 16 aboutissant à l'interrupteur à pression 11 visible à la figure 1.

La figure 4, analogue dans son ensemble à la figure 3, n'en diffère que par le fait que la tubulure 16 ayant été enlevée de l'embout ou ajutage 14 et la tubulure 23 débranchée de l'embout 15, on a, en vue du transport de l'appareil, vissé sur les embouts 14 et 15 les raccords 21 et 22 de la poignée 20 de transport bien visible à droite de la figure 1. L'embout 26 de sortie du déshumidificateur 9, porté par le couvercle 25 de ce dernier, se raccorde à une tubulure 42 destinée à l'évacuation du gaz déshumidifié et transmettant ce dernier à un régulateur de pression non représenté monté en aval de l'appareil, avant le dispositif à ionisation de flamme alimenté en hydrogène et en oxygène par l'appareil conforme à l'invention.

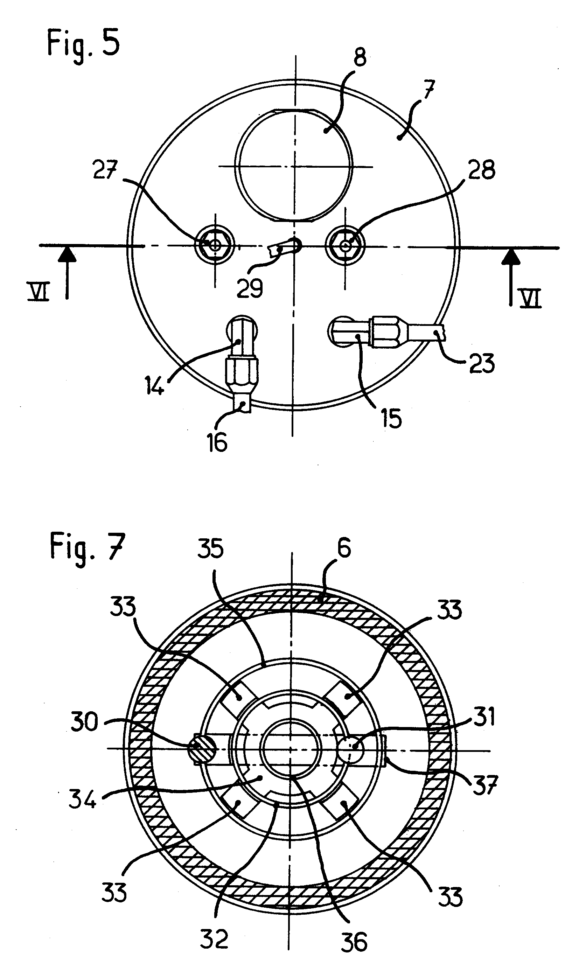

La figure 5 représente de dessus le récipient 6 proprement dit d'électrolyse, tous les autres éléments du dispositif étant enlevés.

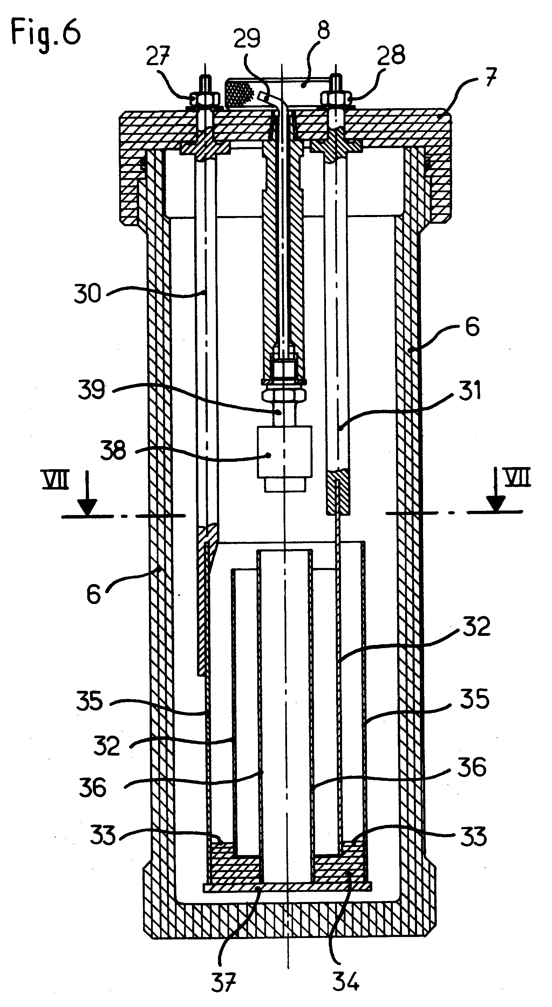

A la figure 6, qui est une vue en coupe axiale suivant la ligne VI - VI de la figure 5, on voit le récipient 6, son couvercle 7 avec le bouchon de remplissage 8 et les bornes 27 et 28 électriquement reliées à des tiges conductrices en métal 30 et 31 , respectivement, servant à amener le courant aux électrodes. Les électrodes sont cylindriques et coaxiales. L'anode 32, reliée à la tige 31, est enserrée entre des becs 33 prévus chacun à l'extrémité de chacune des quatre branches d'une pièce cruciforme 34 qui sera décrite plus loin. Les deux cathodes 35 et 36, également coaxiales entre elles, sont électriquement reliées par une barrette conductrice 37 de liaison. La cathode 35 externe est reliée à la tige 30 amenant le courant et la cathode interne 36 est enfoncée dans une perforation centrale de la pièce cruciforme 34 d'isolement, en prenant contact avec la barrette 37.

Entre les deux bornes 27 et 28, fixées sur le couvercle 7 du récipient 6 d'électrolyse, pénètre, à travers un alésage étanche dudit couvercle, un câble 29 relié au répartiteur électrique qui sera décrit plus en détail plus loin. Ce câble 29, à deux conducteurs, coopère avec un flotteur tubulaire de contact 38, coulissant axialement à la partie inférieure d'une tige 39 le supportant, le contact étant réalisé ou supprimé par déplacement du flotteur 38 baignant dans l'électrolyte, ledit flotteur fournissant, dès qu'il descend par suite d'une baisse de niveau de l'électrolyte, un signal d'alarme indiquant que le remplissage doit être complété, en même temps que le courant fourni aux électrodes se trouve également coupé.

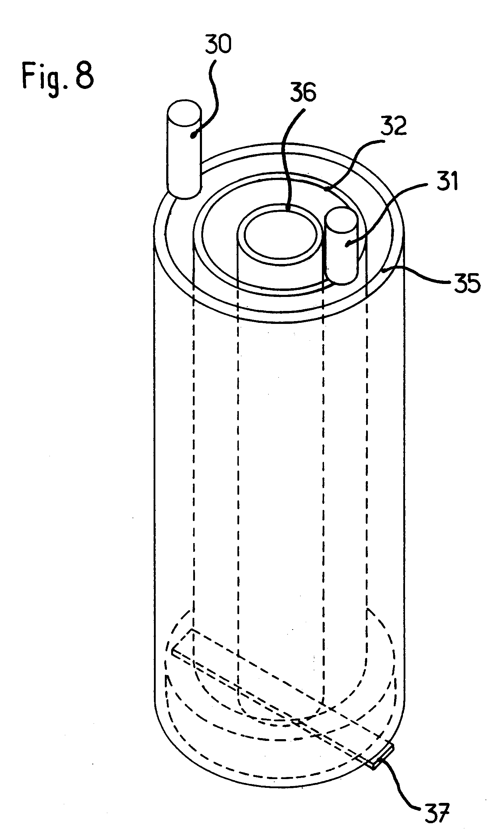

La figure 7, coupe radiale suivant VII - VII de la figure 6, fait bien ressortir l'élément cruciforme 34 et l'emplacement des électrodes 32, 35 et 36, et des tiges 30 et 31 d'alimentation en courant.

La figure 8 est une vue en perspective, ne montrant que le système des électrodes portées par les deux tiges d'alimentation en courant 30 et 31, elles-mêmes supportées par le couvercle 7 du récipient 6 d'électrolyse.

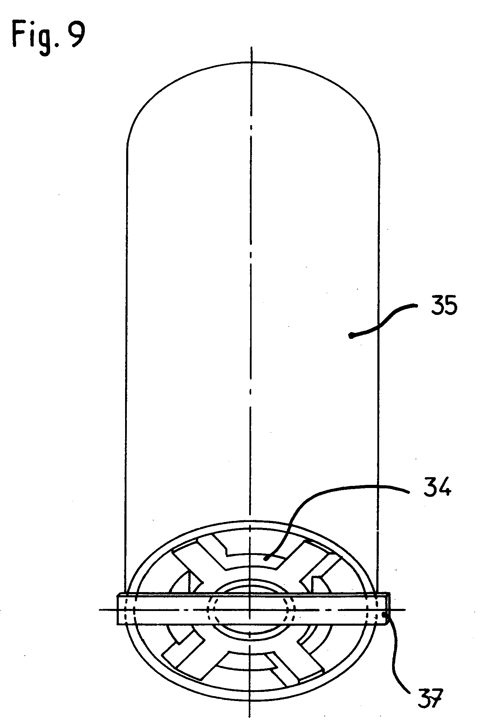

La figure 9, analogue à celle de la figure 8, montre en perspective la liaison électrique des cathodes à l'aide de la barrette 37 et l'isolement de l'anode sur l'élément cruciforme 34 possédant une perforation centrale cylindrique 68 dans laquelle vient se loger, en appui contre la barrette conductrice de liaison 37, la cathode interne 36.

En se reportant à nouveau à la figure 1, et notamment sur sa partie de gauche où l'on a représenté en détail, en position écartée de son support, le tube déshumidificateur 9, on peut voir que ce dernier est essentiellement constitué par un tube transparent 40, réalisé par exemple en polyméthacrylate de méthyle disponible dans le commerce, notamment sous la dénomination déposée "ALTUGLAS"^{(R)}, par un chapeau 25 et par un pot inférieur 41 de décantation. Le chapeau 25 du tube 40 du déshumidificateur proprement dit 9 comporte deux raccords rapides 24 et 26 du type "STAUBLI"^{(R)}, qui sont inversés et qui servent l'un à admettre le mélange gazeux à déshumidifier et l'autre à transférer à son utilisation le mélange gazeux déshumififié.

En ce qui concerne le tube déshumidificateur, le raccord 24 fixé sur son chapeau 25 est prolongé, à l'intérieur du tube 40 ,par une tubulure rectiligne 43 de diffusion pourvue de multiples perforations débouchant dans le gel de silice (non représenté sur le dessin) servant à déshumidifier le mélange gazeux introduit par ledit raccord rapide 24.

Ce tube 43, après avoir traversé un tamis 44 porté par une douille cylindrique 45 pressée dans le tube 40 par un épaulement que comporte le pot de décantation 41 pourvu d'un taraudage servant à son vissage sur la partie inférieure du tube 40, pénètre à l'intérieur dudit pot.

La douille 45, montée avec interposition d'un joint torique, comporte elle-même une anse de préhension 46 servant à son extraction du tube 40.

Le raccord rapide de sortie du mélange gazeux, dont seule la partie mâle est illustrée à la figure 1, se raccorde (voir figure 2) à la partie femelle correspondante 47 elle-même reliée à une tubulure souple 42 aboutissant à un régulateur de pression non représenté.

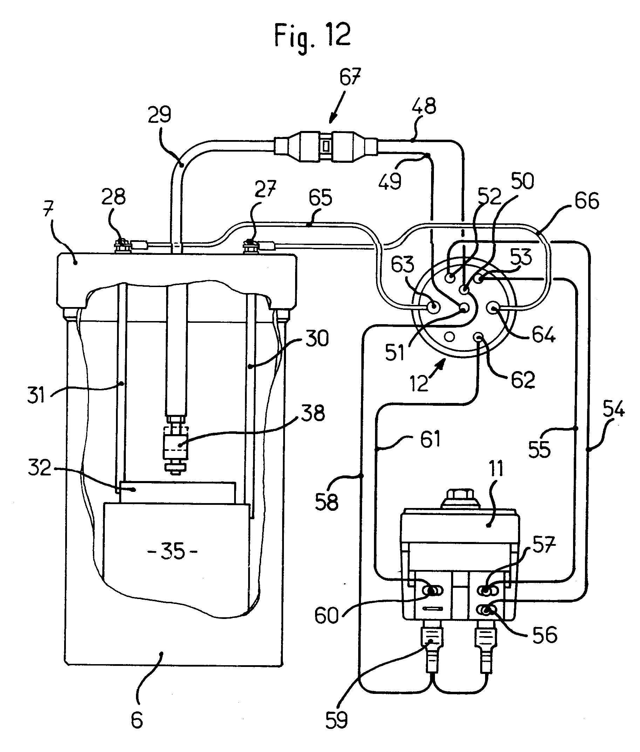

La figure 12 est une vue schématique, avec arrachement partiel du récipient 6 portant le couvercle 7 avec les bornes 27 et 28 d'alimentation en courant des tiges 30 et 31 respectivement reliées la première à la cathode extérieure 35 et la seconde à l'anode intermédiaire 32. On voit également sur cette figure l'interrupteur à flotteur 38 coulissant sur une tige 39 solidaire d'un élément de support porté par le couvercle 7 du récipient 6, ledit flotteur 38 assurant en position haute la liaison électrique des fils 48 et 49 aboutissant aux broches 50 et 51 du répartiteur 12 dont les autres broches 52 et 53 sont reliées par des conducteurs 54 et 55 aux contacts 56 et 57 de l'interrupteur 11 à pression.

De la borne 50 du répartiteur part également un conducteur 58 aboutissant à une broche 59 elle-même reliée à un plot 56. Le plot 60 coopérant avec la broche 59 de l'interrupteur 11 à pression est relié par un conducteur 61 à une broche 62 du répartiteur 12. Aux broches 63 et 64 du répartiteur 12 sont reliés les conducteurs 65 et 66 délivrant le courant aux bornes 28 et 27 d'alimentation des électrodes plongeant dans le récipient 6.

Pour des facilités de démontage du couvercle 7 de la cuve 6, le conducteur 29 est interrompu par un raccord électrique 67 permettant sa déconnexion.

Il va de soi que l'appareil de production d'un mélange gazeux d'hydrogène et d'oxygène n'a été décrit qu'à titre d'exemple purement explicatif, nullement limitatif, et que diverses modifications de détail pourraient être apportées à la forme de réalisation indiquée sans que l'on sorte pour autant du domaine de l'invention.

C'est ainsi notamment que la disposition réciproque des électrodes pourrait être différente de celle représentée et que l'emplacement mutuel des divers éléments constituant l'appareil pourrait être modifié, les organes et éléments de contrôle pouvant parfaitement être directement disposés, totalement ou en partie, sur le couvercle du récipient d'électrolyse.

De même, le câblage électrique pourrait être différent de celui représenté à titre d'exemple.

## Revendications

1. Appareil d'électrolyse de l'eau, fournissant un mélange stoechiométrique d'oxygène et d'hydrogène utilisable dans un dispositif d'analyse à ionisation de flamme, comprenant un châssis immobilisable sur son assise et supportant le système (6, 7, 32, 35, 36) d'électrolyse, un dispositif (12) d'alimentation électrique de ce dernier, un organe (10) de contrôle de la pression des gaz préparés dans le système d'électrolyse (6, 7, 32, 35, 36), un organe de sécurité (11) arrêtant l'électrolyse en cas de surpression, un dispositif (9) de déshumidification des gaz se dégageant du système d'électrolyse (6, 7, 32, 35, 36),
ledit appareil étant caractérisé par le fait qu'il comporte en organe (38) de surveillance, qui contrôle dans le récipient d'électrolyse le niveau minimal de l'électrolyte présent et qui, en cas d'insuffisance de remplissage du récipient (6) d'électrolyse, arrête cette dernière en fournissant un signal d'alarme, et une poignée (20) amovible qui empêche toute utilisation de l'appareil lors de son transport.

2. Appareil d'électrolyse de l'eau selon la revendication 1,
caractérisé par le fait que le récipient (6) contenant l'électrolyte supporte les électrodes (32, 35) par son couvercle (7) étanche qui est pourvu d'un bouchon (8) de remplissage et de deux ajutages ou embouts (14, 15) isolés de l'atmosphère par des raccords rapides pouvant être reliés l'un à l'organe (10) de contrôle de la pression des gaz libérés dans le réservoir (6) d'électrolyse et l'autre au dispositif déshumidificateur (9) porté par le châssis (1, 2, 5) du dispositif.

3. Appareil d'électrolyse de l'eau selon les revendications 1 et 2,
caractérisé par le fait que le dispositif (9) de déshumidification du mélange des gaz produits est constitué par un récipient tubulaire (40) rempli de gel de silice et obturé à sa partie supérieure par un couvercle (25) étanche supportant deux raccords rapides (24, 26) inverses, la partie femelle (24) du raccord rapide, servant à l'entrée du mélange gazeux dans le dispositif déshumidificateur (9), pouvant être reliée à la partie mâle (24') correspondante du raccord, reliée quant à elle, par une tubulure (23) à un des embouts du couvercle (7) du récipient (6) d,électrolyse, la partie mâle (26) de l'autre raccord rapide, solidaire du couvercle (25) du récipient (9) de déshumidification du mélange gazeux, étant reliée à la partie femelle correspondante du raccord, qui est reliée, en ce qui la concerne, à une tubulure (42) servant au transfert du mélange gazeux hydrogène/oxygène déshumidifié à un dispositif régulateur de pression monté en amont d'un système d'analyse à ionisation de flamme.

4. Appareil selon l'une quelconque des revendications 1 à 3,
caractérisé par le fait que la partie femelle (24) du raccord rapide, servant à l'introduction du gaz à déshumidifier, débouche dans un tube de diffusion (43) pourvu d'une pluralité de perforations et traversant le gel de silice, ledit tube, après avoir traversé une perforation prévue dans un tamis (44) porté par une douille (45) pénétrant dans le tube (40) à sa partie inférieure et supportant le gel de silice, débouchant lui-même, à sa partie inférieure, dans un pot de décantation (41) amovible.

5. Appareil selon l'une quelconque des revendications 1 à 4,
caractérisé par le fait que le pot (41) de décantation amovible est vissable sur la partie inférieure du tube (40) du déshumidificateur et qu'il présente intérieurement un épaulement, qui lorsqu'il est mis en place sur ledit déshumidificateur, presse, dans le tube proprement dit (40) de celui-ci, une douille (45) de support du tamis (44) de retenue du produit déshumidificateur, ladite douille étant pourvue d'un joint torique d'étanchéité et d'une anse (46) de préhension facilitant son extraction du tube.

6. Appareil selon l'une des revendications 1 à 5,
caractérisé par le fait que les électrodes (32, 35, 36), supportées par les tiges (30, 31) solidaires des bornes (27, 28) d'alimentation en courant, sont cylindriques.

7. Appareil selon l'une des revendications 1 à 6,
caractérisé par le fait que l'anode (32), reliée à la tige (31) alimentée en courant par la borne (28), est insérée entre deux cathodes également coaxiales (35, 36), qui sont reliées entre elles par une barrette métallique de liaison (37).

8. Appareil selon l'une des revendications 1 à 7,
caractérisé par le fait que les électrodes (32, 35, 36) sont montées sur une pièce isolante cruciforme (34) en forme d'étoile, dont les branches sont pourvues de becs (33) servant au maintien de l'anode (32).

9. Appareil selon l'une des revendications 1 à 8,
caractérisé par le fait que la pièce cruciforme isolante (34) comporte une perforation cylindrique centrale (68) dans laquelle vient se loger, en appui ferme contre la barrette métallique (37) de liaison, la cathode cylindrique centrale (36).

10. Appareil selon l'une des revendications 1 à 9,
caractérisé par le fait que la pièce cruciforme (34) est emmanchée dans la cavité cylindrique de la cathode externe (35).

## Claims

1. Apparatus for the electrolysis of water, providing a stoichiometric mixture of oxygen and hydrogen which may be used in a flame ionisation type analysis device, comprising a frame which may be immobilised on its base plate and supports the electrolysis system (6, 7, 32, 35, 36), a device (12) for the electrical supply thereof, an element (10) for monitoring the pressure of the gases prepared in the electrolysis system (6, 7, 32, 35, 36), a safety element (11) stopping electrolysis in the case of excess pressure, a device (9) for the dehumidification of the gases released from the electrolysis system (6, 7, 32, 35, 36), said apparatus being characterised in that it comprises a monitoring element (38) which monitors the minimum level of electrolyte present in the electrolysis container and, if the electrolysis container (6) is inadequately filled, stops electrolysis by providing an alarm signal, and a removable grip (20) which prevents use of the apparatus during the transportation thereof.

2. Apparatus for the electrolysis of water according to claim 1, characterised in that the container (6) containing the electrolyte supports the electrodes (32, 35) by its impermeable lid which is provided with a filling stopper (8) and two nozzles or connectors (14, 15) which are isolated from the atmosphere by quick release couplings of which one may be connected to the element (10) for monitoring the pressure of the gases liberated in the electrolysis tank (6) and the other to the dehumidifying device (9) carried by the frame (1, 2, 5) of the device.

3. Apparatus for the electrolysis of water according to claims 1 and 2, characterised in that the device (9) for dehumidifying the mixture of gases produced consists of a tubular container (40) filled with silica gel and blocked at its upper portion by an impermeable lid (25) supporting two inverted quick release couplings (24, 26), the female portion (24) of the quick release coupling serving for the admission of the gaseous mixture into the dehumidifying device (9) being adapted to be connected to the corresponding male portion (24') of the coupling which, for its part, is connected by a pipe (23) to one of the connectors of the lid (7) of the electrolysis container (6), the male portion (26) of the other quick release coupling, integral with the lid (25) of the container (9) for dehumidifying the gaseous mixture being connected to the corresponding female portion of the coupling which is connected, for its part, to a pipe (42) serving to transfer the gaseous mixture of dehumidified hydrogen/oxygen to a pressure-regulating device mounted upstream of a flame ionisation type analysis system.

4. Apparatus according to any one of claims 1 to 3, characterised in that the female portion (24) of the quick release coupling serving for the introduction of the gas to be dehumidified opens into a diffusion tube (43) provided with a plurality of perforations and traversing the silica gel, said tube, after having traversed a perforation provided in a screen (44) carried by a bush (45) penetrating into the tube (40) at its lower portion and supporting the silica gel itself opening at its lower portion into a removable decantation pot (41).

5. Apparatus according to any one of claims 1 to 4, characterised in that the removable decantation pot (41) may be screwed on the lower portion of the tube (40) of the dehumidifier and that it has an internal shoulder which, when positioned on said dehumidifier, presses, in the actual tube (40) thereof, a bush (45) for supporting the screen (44) retaining the dehumidifier product, said bush being provided with an O-ring seal and with a grab handle (46) facilitating its extraction from the tube.

6. Apparatus according to one of claims 1 to 5, characterised in that the electrodes (32, 35, 36) supported by rods (30, 31) integral with the power supply terminals (27, 28) are cylindrical.

7. Apparatus according to one of claims 1 to 6, characterised in that the anode (32) connected to the rod (31) supplied with current by the terminal (28) is inserted between two cathodes which are also coaxial (35, 36) which are connected to one another by a metallic connecting bar (37).

8. Apparatus according to one of claims 1 to 7, characterised in that the electrodes (32, 35, 36) are mounted on a star-shaped cruciform insulating member (34) of which the branches are provided with spouts (33) serving to hold the anode (32).

9. Apparatus according to one of claims 1 to 8, characterised in that the insulating cruciform member (34) comprises a central cylindrical perforation (68) in which the central cylindrical cathode (36) is housed while resting securely against the metallic connecting bar (37).

10. Apparatus according to one of claims 1 to 9, characterised in that the cruciform member (34) is fitted in the cylindrical cavity of the external cathode (35).

## Patentansprüche

1. Vorrichtung zur Elektrolyse von Wasser, die ein stöchiometrisches Sauerstoff-Wasserstoffgemisch liefert, das in einer Flammenionisationsanalysevorrichtung verwandt werden kann, mit einem Gehäuse, das auf seinem Fundament feststeht und die Elektrolyseanordnung (6, 7, 32, 35, 36) hält, einer Einrichtung (12) zu deren elektrischer Energieversorgung, einem Steuerteil (10) zum Steuern des Druckes des Gases, das in der Elektrolyseanordnung (6, 7, 32, 35, 36) gebildet wird, einem Sicherheitsteil (11), der die Elektrolyse bei einem Überdruck unterbricht, einer Einrichtung (9) zum Entfeuchten des Gases, das von der Elektrolyseanordnung (6, 7, 32, 35, 36) kommt, welche Vorrichtung dadurch gekennzeichnet ist, daß sie einen Überwachungsteil (38), der im Elektrolysebehälter die kleinste Höhe des vorhandenen Elektrolyten kontrolliert und der bei einer unzureichenden Füllung des Elektrolysebehälters (6) die Elektrolyse unterbricht und ein Alarmsignal ausgibt, und einen abnehmbaren Griff (20) aufweist, der jede Benutzung der Vorrichtung während ihres Transportes verhindert.

2. Vorrichtung zur Elektrolyse von Wasser nach Anspruch 1, dadurch gekennzeichnet, daß der Behälter (6), der den Elektrolyten enthält, die Elektroden (32, 35) an seinem dichten Deckel (7) hält, der mit einem Stöpsel (8) zum Auffüllen und zwei Stutzen oder Ansätzen (14, 15) versehen ist, die gegenüber der Außenatmosphäre über Schnellkupplungen isoliert sind, die mit einem Teil (10) zum Kontrollieren des Druckes des Gases, das vom Elektrolysebehälter (6) freigegeben wird, einerseits und andererseits mit einer Entfeuchtungseinrichtung (9) verbunden sind, die vom Gehäuse (1, 2, 5) der Vorrichtung gehalten sind.

3. Vorrichtung zur Elektrolyse von Wasser nach Anspruch 1 und 2, dadurch gekennzeichnet, daß die Einrichtung zum Entfeuchten des erzeugten Gasgemisches aus einem rohrförmigen Behälter (40), der mit Silicagel gefüllt ist und an seinem oberen Teil mit einem dichten Deckel (25) verschlossen ist, der zwei reziproke Schnellkupplungen (24, 26) aufweist, wobei der Mutterteil (24) derjenigen Schnellkupplung, die als Eingang für das Gasgemisch in die Entfeuchtungsvorrichtung (9) dient, mit dem entsprechenden Vaterteil (24') der Kupplung verbunden werden kann, der seinerseits über eine Rohrleitung (23) mit einem der Stutzen des Deckels (7) des Elektrolysebehälters (6) verbunden ist, während der Vaterteil (26) der anderen Schnellkupplung, der fest am Deckel (25) des Behälters (9) zum Entfeuchten des Gasgemisches angebracht ist, mit einem entsprechenden Mutterteil der Kupplung verbunden ist, das seinerseits mit einer Rohrleitung (42) verbunden ist, die dazu dient, das entfeuchtete Wasserstoffsauerstoffgasgemisch einer Druckregelvorrichtung zuzuführen, die oberhalb der Flammenionisationsanalysevorrichtung angebracht ist.

4. Vorrichtung nach einem der Ansprüche 1 bis 3, dadurch gekennzeichnet, daß der Mutterteil (24) der Schnellkupplung, die als Einlaß des Gases zum Entfeuchter dient, in ein Diffusionsrohr (43) mündet, das mit einer Vielzahl von Perforationen versehen ist und durch das Silicagel hindurchgeht, welches Rohr nach dem Durchgang durch eine Perforation, die in einem Sieb (44) vorgesehen ist, das von einer Hülse (45) gehalten ist, in das Rohr (40) am unteren Teil eintritt, das das Silicagel hält und seinerseits an seinem unteren Teil in einem abnehmbaren Dekantierungstopf (41) mündet.

5. Vorrichtung nach einem der Ansprüche 1 bis 4, dadurch gekennzeichnet, daß der abnehmbare Dekantierungstopf (41) an den unteren Teil des Entfeuchterrohres (40) geschraubt ist und im Inneren einen Ansatz aufweist, der dann, wenn der Topf an seiner Stelle am Entfeuchter angeordnet ist, genaugenommen im Rohr (40) des Entfeuchters gegen eine Hülse (45) zum Halten des Siebes (40) zum Zurückhalten der Entfeuchtungsprodukte drückt, welche Hülse mit einem O-Ring und einem Bügelgriff (46) versehen ist, welcher ihr Herausziehen aus dem Rohr erleichtert.

6. Vorrichtung nach einem der Ansprüche 1 bis 5, dadurch gekennzeichnet, daß die Elektroden (32, 35, 36), die von Stangen (30, 31) gehalten sind, die fest mit Stromversorgungsanschlüssen (27, 28) verbunden sind, zylindrisch sind.

7. Vorrichtung nach einem der Ansprüche 1 bis 6, dadurch gekennzeichnet, daß die Anode (32), die mit einer Stange (31) verbunden ist, die über den Anschluß (28) mit Strom versorgt wird, zwischen zwei gleichfalls koaxialen Kathoden (35, 36) eingesetzt ist, die miteinander über eine metallische Verbindungsschiene (37) verbunden sind.

8. Vorrichtung nach einem der Ansprüche 1 bis 7, dadurch gekennzeichnet, daß die Elektroden (32, 35, 36) an einem kreuzförmigen Isolierstück (34) in Form eines Sternes angebracht sind, dessen Arme mit Nasen (33) versehen sind, die dazu dienen, die Anode (32) zu halten.

9. Vorrichtung nach einem der Ansprüche 1 bis 8, dadurch gekennzeichnet, daß das kreuzförmige Isolierstück (34) eine mittlere zylindrische Perforation (68) aufweist, in der in einer festen Anlage an der metallischen Verbindungsschiene (37) die mittlere zylindrische Kathode (36) sitzt.

10. Vorrichtung nach einem der Ansprüche 1 bis 9, dadurch gekennzeichnet, daß das kreuzförmige Stück (34) in den zylindrischen Hohlraum der äußeren Kathode (35) eingesteckt ist.
